# EUROPEAN PATENT APPLICATION

(11) **EP 3 839 244 A1**
(43) Date of publication of application: **23.06.2021**
(21) Application number: 19821755.6
(22) Date of filing: 29.01.2019
(51) Int. Cl.: F03B 13/14, F03C 99/00

(54) **MECHANICAL ENGINE FOR GENERATING ENERGY BY MEANS OF WATER MOVEMENT**

(30) Priority: 21.06.2018 BR 102018012716; 17.01.2019 BR 102019001010
(71) Applicant: Correa Antunes, Hamilton, 96745-000 Charqueadas - RS (BR)
(72) Inventor: Correa Antunes, Hamilton, 96745-000 Charqueadas - RS (BR)
(74) Representative: Pereira Garcia, João Luís
(86) International application number: PCT/BR2019/050024
(87) International publication number: WO 2019/241861

(57) **Abstract**

"MECHANICAL ENGINE FOR THE GENERATION OF ENERGY THROUGH WATER MOVEMENT", refers to a mechanical motor (1) to (41), with their auxiliary sets, with the objective of generating mechanical and electrical energy, or both, being plants electric lines with this system can be built on the banks or inside the sea, river or islands, where the cost benefit of the energy by the conventional way, does not become compensating, or practically inaccessible places, but that have waves, tides, or level differentials in waters. As these sources of energy, in water there are in abundance on the planet, possible future plants of this system, may be more spread out, and in greater quantity, thus reducing the number of posts, towers, compensation equipment, components, and transmission wires. In case of use in water navigation, this engine can be used to replace, totally or partially, conventional fuels and engines, for mechanical handling, and the generation of electric energy on board.

## Description

### Subject:

The present invention relates to a mechanical motor, to generate mechanical, electrical energy, using tides, waves, level differentials, or any movement of water.

### State of the Art

Conventional wind farms work with the principles of using wind speed to generate mechanical and electrical energy.

Conventional solar energy generated by photovoltaic cells, has the characteristic of transforming light into electrical energy.

Conventional solar energy by heat uses equipment that has the characteristic of generating mechanical or electrical energy, using the heat of the sun as an energy source.

Conventional hydroelectric plants work with the principle of a large water deposit, which is emptied through the blades of an electric energy generator, making it rotate, thus producing electrical energy.

Conventional thermoelectric plants produce electrical energy by burning mineral or vegetable coal, transforming this heat energy into mechanical and electrical energy.

Nuclear plants also produce mechanical and electrical energy, through fission of the nucleus of radioactive atoms.

The plants or mini plants powered by liquid fuels, some called generator sets, which are normally large combustion engines, have a generator for the production of electric energy coupled to these.

Conventional wind farms, although they seem simple, need a certain mechanical, electrical, and electronic complexity, for their good functioning, that is why their costs are still high, in relation to their production capacity.

Solar energy generated by photovoltaic cells, popularly known as solar energy panels, is normally not possible for continuous generation of energy, 24 hours a day, because it depends on sunlight, so at night, it is not possible to use it generation, in addition to having a high cost in relation to the generation capacity. Even using conventional batteries, to compensate for the moments without light or low light, the cost benefit is further impaired in relation to other ways of obtaining energy, except where the cost is not so important, and one of the few cases, are satellites artificial.

Solar heat energy, normally used in water heating, has also hindered its continuous use, as it is sporadic, that is, limiting its use only on sunny days, its cost benefit in generating mechanical energy and electrical.

Conventional hydroelectric power plants need a large area that must be flooded, causing a strong environmental impact, and are also subject to lowering their levels during the dry season, thus compromising the demands demanded, as well as the place to build one. hydroelectric plants are more critical, as are their works and high cost maintenance.

Thermoelectric plants, in addition to having a high cost, generate high levels of pollution and increase in dangerousness, in addition to having to be built in more specific places. And also coal-fired power plants, they don't work with any kind of coal.

Nuclear power plants have energy generation efficiency, but a very high risk to the health of living beings, especially human beings, so much so that some cities have been abandoned, due to these radioactive contaminations.

Plants or mini-plants powered by liquid fuels, also called generator sets, in addition to polluting the environment by burning them, generate high costs, making their use in many cases unfeasible, or due to high costs, including fuel, or high levels of pollution. Description of the Invention

The invention has the basic task of drastically reducing costs in the production of mechanical or electrical energy, or both, including the movement of vessels in waters, drastically reducing the consumption of fuels for their full operation, and in these cases, the buoys or buoys can be slid through ducts or containment rails, and they will have to have changes in their physical forms, to follow the aerodynamics of the vessels.

This part is resolved according to claim 1. According to this, mechanical or electrical energy is generated, using tides, waves, level differentials, or any water movement, including the use of earth's gravity, inertia, by the mass times acceleration ratio to stabilize rotation and force multiplication.

The invention has the advantage of allowing power plants with this system, to be built on the banks of the sea, rivers, or on islands, where the cost benefit of energy in the conventional way does not become worthwhile, or in practically inaccessible places , but which have waves or tides of liquids, thereby forming differentials of levels, for its functioning. As the energy source with different water levels, through tides or waves, there are plenty of them on the planet, possible future plants using this system may be spread out, and exist in greater quantities, thus reducing the number of posts, towers, equipment components, components, cables or wires for power transmission.

In the case of use in water navigation, this equipment can be used to replace all or part of fuels, or conventional power generation systems on board, and can be used to generate mechanical and electrical energy, including to move water vessels, replacing totally or partially its conventional fuels and engines.

The invention has one or more floating elements, containing weights inside, and it may be the water itself, in such a way that around 10% remains fluctuating. These floating elements are hung from cables, which are wrapped in pulleys with ratchets, guaranteeing their turns in only one direction, which, in turn, transmit these turns each time the buoys descend, and the axis of the pulleys are connected to a box rotation multiplier, which, in turn, is connected to a flywheel in order to stabilize the rotation in moments of intervals, between a descent and another of these buoys or floating elements. Following the axis of this flywheel, an electric energy generator is installed.

### Description of the drawings

In the following the invention will be described in greater detail with representation to the drawings. It is shown:

In the drawings the arrows from (1) to (41), indicate the set that makes it work, the components of (9) to (19), in case of platform, or (6), (8), (9), (13) to (19), (32), (35) in cases of navigation, form parts of the set, which can be more than one, and are aids to contribute to the increase in energy and, especially in the stabilization of rotation, of the electric power generator (3), also through the flywheel (29).

All of this equipment can be installed on sea or river vessels for power generation on board, or platforms, specific or not, parapets, or mountains, on borders or not, and river or sea.

We will demonstrate here, on a platform, ships, or any vessels in waters, which will also serve as an explanation for all of the above modalities; and starting the explanations of operation, it is the following:

All the equipment is mounted on the platform (1), or vessel, the floating elements (18) and (31) must have a weight such that they are only around 10% floating, and the rest sunk in the liquid, which in this case is the sea of waves (30), and in the sense of obtaining the maximum possible weight of these floating elements (18) and (31) and also a greater amplitude of the coming and going of them in this case here we will use the very sea water (19) and (33) as weight, that is, it will be filled with water, until the floating elements (18) and (31) are approximately 10% floating. The sea waves (30) cause the floating heavy elements (18) and (31) to swing through their cables, metal guides, or containment rods (32), (35), (36) and (37), or being able to be fixed on the platform pillars (1), or aquatic vessel hulls, and in the case of platforms, fixed, or without any fixation, in the bottom, artificial or natural (34), and when the floating elements (18) and (31) moving upwards, they will tend to loosen the cables (6) and (12), causing the counterweights (5) and (9), by gravity, to rotate the pulleys (15) and (24), in the direction (13) and (25), through the pulleys (8) and (11), and (17) and (22) in the case of vessels, supported by the rods (7) and (10), or the vessel's hull (1), and the cables (6) and (12) that pass through the holes (17) and (22) on the platform (1), or pulleys (17) and (22) on the vessel (1), making the pulleys (15) and (24) through their turnstiles (16) and (23), just slide on the shaft (21), without causing any traction in this, when they are pulled in the directions (13) and (25).

When the floating elements (18) and (31) descend by the movement of the waves (30), they will pull the cables (6) and (12), through the holes (17) and (22) in the platform (1), or boat hulls (1), or pulleys (17) and (22), rotating the pulleys (15) and (24), in the direction (14) and (26), causing the turnstiles (16) and (23), fixed on the pulleys (15) and (24), are fixed on the axis (21), making it turn in the direction (14) and (26), and this rotation activates the rotation multiplier box (20), in an ideal multiplication ratio for the generator (3), through the flywheel (29) which has the function of stabilizing rotation, through the inertia effect, with or without pulleys (2) and (28), in a ideal rotation, for the characteristics of the generator (3) in question. This multiplier box (20), on water vessels, has two output shafts (38) and (39), obtaining an output for the generator (3) and another for the propeller (41), through the flywheel (29), and gearbox (40), which has the function of providing gear shifting, neutral, and reversing rotation.

Even if there is a slight change in speed in the flywheel (29), this will not change the output voltage (4) of the generator (3), because most generators have automatic voltage control, which maintains the voltage output (4) constant regardless of the generator speed (3), within a limit.

The weights of the counterweights (5) and (9) must be as small as possible in relation to the weights of the floating elements (18) and (31), but such that they do not cause the cables to slip (6) and (12) on the pulleys (15) and (24) when these cables (6) and (12) are pulled by the floating heavy elements (18) and (31), and in addition to the flywheel (29) playing an important role, described above, the floating elements (18) and (31) help you, as they increase their tractive force in the cables (6) and (12) in addition to the weight of these floating elements (18) and (31), because more traction appears than the weights of these floating elements (18) and (31) from the mass times their acceleration, greatly increasing the efficiency of energy generation at the output (4) of the generator (3).

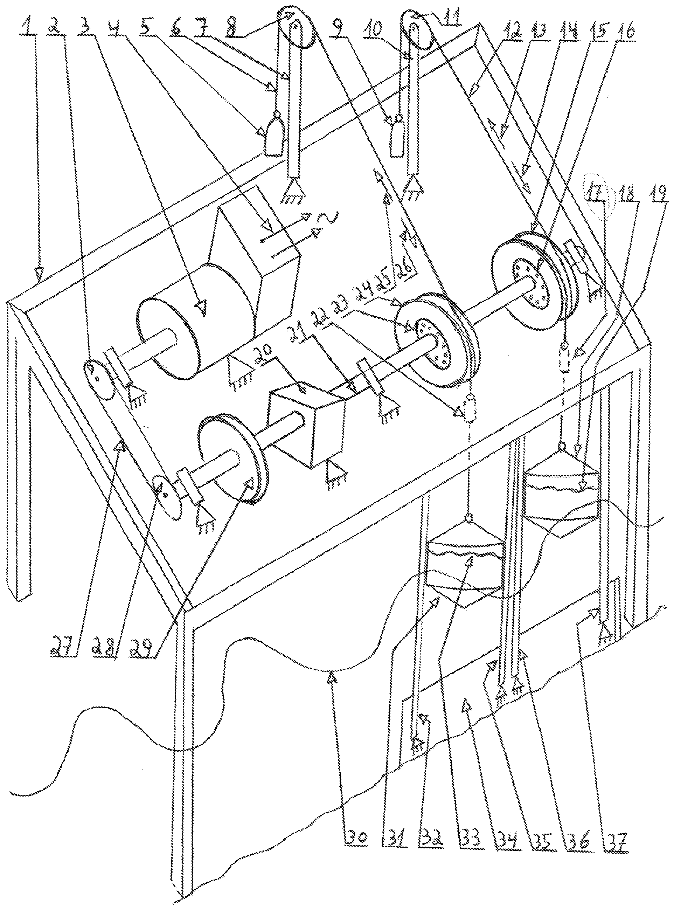

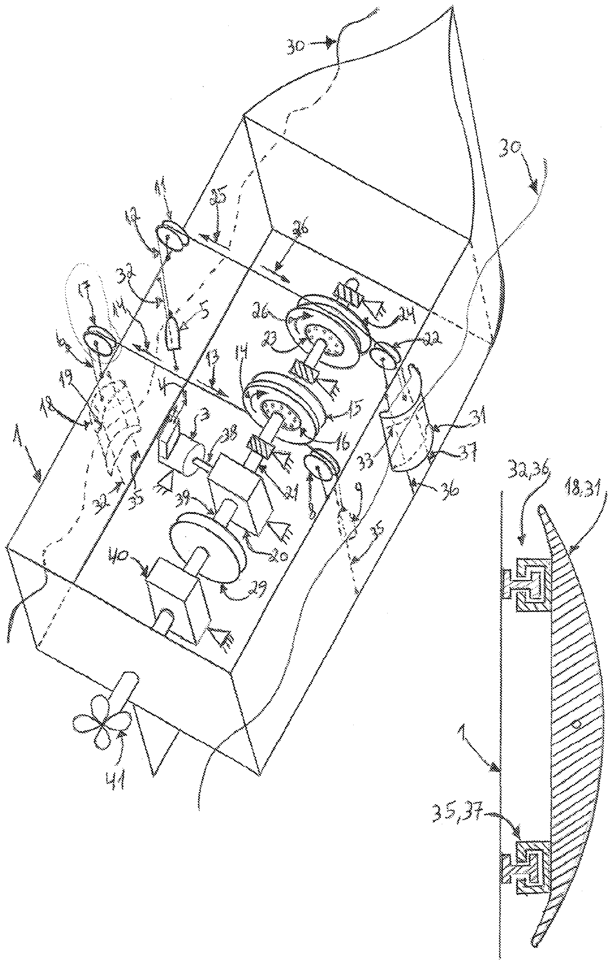

## Claims

1. MECHANICAL ENGINE FOR THE GENERATION OF ENERGY THROUGH WATER MOVEMENT, **characterized by** producing mechanical, electrical energy, or both, together (1) to (41), using heavy floating bodies (18) and (31), through waves, tides , level differences in liquids, and also through pulleys (8), (11), (17), (22), on supports (1), (7), (10), being pulled by counterweights (5), (9), being pulled by cables, or ropes, chains, toothed rods, and auxiliary sets (9a19), and (6), (8), (9), (13a19), (32), (35), in navigation cases.

2. MECHANICAL ENGINE FOR GENERATION OF ENERGY THROUGH WATER MOVEMENT, according to claim 1, **characterized by** producing mechanical, electrical energy, or both, using this same system in artificial or natural walls, inside or outside liquids, as it can be in sides of vessels in waters, or bodies floating in them.

3. MECHANICAL ENGINE FOR THE GENERATION OF ENERGY THROUGH WATER MOVEMENT, according to claim 1, **characterized by** floating elements, (18) and (31), increasing their weights in such a way as to keep the minimum floating, with the main objective of if you get as much weight as possible, resulting in more energy per mass times acceleration, inertia and gravity.

4. MECHANICAL ENGINE FOR GENERATION OF ENERGY THROUGH WATER MOVEMENT, according to claim 1, **characterized by** flywheel (29), to promote stabilization of rotation, at intervals of cable traction, or chains, toothed rods, of the heavy elements floating (18) and (31).

5. MECHANICAL ENGINE FOR POWER GENERATION THROUGH WATER HANDLING, according to claim 1, **characterized by** a gearbox (40) for changing gear, neutral, and reversing rotation, only for the engine.
